# EUROPÄISCHE PATENTSCHRIFT

(11) **EP 0 984 842 B1**
(45) Veröffentlichungstag und Bekanntmachung des Hinweises auf die Patenterteilung: **08.08.2001**
(21) Anmeldenummer: 98937427.7
(22) Anmeldetag: 28.05.1998
(51) Int. Cl.: B23C 3/06

(54) **VERFAHREN ZUM STEUERN DER BEARBEITUNG EINES WERKSTÜCKES**
METHOD FOR CONTROLLING WORKPIECE MACHINING
PROCEDE POUR COMMANDER L'USINAGE D'UNE PIECE

(30) Priorität: 28.05.1997 DE 19722454
(43) Veröffentlichungstag der Anmeldung: 15.03.2000
(73) Patentinhaber: BOEHRINGER WERKZEUGMASCHINEN GmbH, D-73033 Göppingen (DE)
(72) Erfinder: SCHARPF, Paul-Dieter, D-73114 Schlat (DE); KOHLHASE, Matthias, D-78713 Schramberg (DE); VOSS, Wolf-Dietrich, D-73087 Boll (DE)
(74) Vertreter: Strych, Werner Maximilian Josef, Dr.
(86) Internationale Anmeldenummer: EP9803203
(87) Internationale Veröffentlichungsnummer: WO9853944

(56) Entgegenhaltungen:
- WO-A-96/39269
- DE-A- 19 626 609
- DE-C- 19 626 627

## Beschreibung

Die Erfindung betrifft ein Verfahren zum Steuern der Bearbeitung eines sich während der Bearbeitung bewegenden Werkstückes, an dem mehrere Werkzeugeinheiten an unterschiedlichen Bearbeitungsstellen gleichzeitig arbeiten gemäß Oberbegriff den Patentansprüche 1 und 8.

Eine Bearbeitung, insbesondere eine spanende Bearbeitung an einem metallenen Werkstück, kann durch Veränderung der Bewegungsparameter des Werkstückes sowie des Werkzeuges, insbesondere der Bewegungsparameter relativ zueinander, stark beeinflußt werden. Dabei wird versucht, bei der Bearbeitung ein bestimmtes Optimierungsziel zu erreichen, beispielsweise die Erzielung einer möglichst guten Oberflächenqualität, die Erzielung einer möglichst kurzen Gesamtbearbeitungszeit pro Werkstück oder die Erzielung einer möglichst hohen Standzeit der Werkzeuge. Letzteres ist aufgrund des Primärzieles der Kosten Senkung heute das häufigste Optimierungsziel.

Im folgenden wird konkret die Bearbeitung einer Kurbelwelle mittels Drehfräsen, bei welcher ein relativ schnell rotierendes Fräswerkzeug an einer relativ langsam drehenden Kurbelwelle Mantelflächen und/oder Stirnflächen bearbeitet, beschrieben.

Bei spanenden Bearbeitungen wie dem Drehfräsen, insbesondere dem Hochgeschwindigkeits-Drehfräsen, richtet sich die Optimierung der Bearbeitung nicht nur nach der Schnittgeschwindigkeit, also der Relativgeschwindigkeit von Werkzeugschneide zu Werkstück an der jeweiligen Bearbeitungsstelle, sondern auch nach einer Vielzahl anderer Faktoren, wie Temperatur an der Bearbeitungsstelle, maximaie und durchschnittliche Spandicke, zeitlicher Abstand zwischen Außereingriffgeraten einer Schneide und neuem Eingriff der nächsten Schneide desselben Werkzeuges etc.

Da zwei oder mehr Fräseinheiten, die hinsichtlich ihrer Bewegungsparameter, insbesondere ihrer Drehzahl, unabhängig voneinander steuerbar sind, gleichzeitig an der sich drehenden Kurbelwelle an z. B. unterschiedlichen Axialpositionen arbeiten, können nicht alle Bearbeitungsstellen jeweils für sich auf 100 % des möglichen Optimierungszieles eingestellt werden, da die zwar frei wählbare, jedoch für alle Bearbeitungsstellen gleich vorliegende Drehzahl der Kurbelwelle dies verhindert.

Gemäß der DE 195 46 197 C1 wird daher vorgeschlagen, die Bewegungsparameter, insbesondere die Drehzahl der Kurbelwelle. so zu wählen, daß an einer der Bearbeitungsstellen eine 100 %-ige Optimierung der Bearbeitung erreicht wird. Die sich daraus ergebende Drehzahl der Kurbelwelle muß für die anderen Bearbeitungsstellen als nicht abdingbare Eingangsgröße akzeptiert werden, so daß diese anderen Bearbeitungsstellen keinen 100 %-igen Optimierungsgrad mehr erreichen können.

Die Drehzahl der Kurbelwelle stellt damit für die übrigen Bearbeitungsstellen nach dem Master-Slave-Prinzip die Mastervorgabe dar.

Der Nachteil dieses Verfahrens liegt jedoch darin, daß hierdurch zwar für eine der Bearbeitungsstellen die Bearbeitung optimal gefahren werden kann, jedoch über die Summe der Bearbeitungsstellen keine Optimierung des Bearbeitungsergebnisses erzielt werden kann.

Damit stellt sich die Aufgabe, ein Verfahren zum Steuern einer solchen Bearbeitung zu schaffen, welches eine Optimierung über die gesamte Bearbeitung erlaubt.

Diese Aufgabe wird durch die kennzeichnenden Merkmale des Anspruches 1 bzw. 8 gelöst. Vorteilhafte Ausführungsformen ergeben sich aus den Unteransprüchen.

Dadurch ergeben sich zwar für die Bewegungsparameter, insbesondere für die Kurbelwellendrehzahl, Werte die von den jeweiligen entsprechenden Optimalwerten der einzelnen Bearbeitungsstellen abweichen, in der Summe der Bearbeitung jedoch eine optimale Bearbeitung ermöglicht.

Erst durch Abrücken von den Bewegungsparametern und insbesondere von der Kurbelwellendrehzahl, die für eine einzige der mehreren gleichzeitigen in Arbeit befindlichen Bearbeitungsstellen optimal wäre, kann in der Summe ein optimales Bearbeitungsergebnis erreicht werden.

Dies kann an folgendem Zahlenbeispiel verifiziert werden:

An der Kurbelwelle KW arbeiten an den zwei Bearbeitungsstellen A, B die Hochgeschwindigkeits-Außenfräser a, b. Optimierungsziel sei eine möglichst hohe Standzeit der Fräser a bzw. b.

Nach dem vorbeschriebenen bekannten Verfahren würde z. B. die Bearbeitungsstelle A zu 100 % optimiert, indem dort bei folgenden Parametern:
Drehzahl der Kurbelwelle nKW: 15 U/min
Drehzahl des Fräsers na: 120 U/min
die Standzeit ta = 1.000 min erreicht wird.

Wegen nKW = 15 U/min wird an der Bearbeitungsstelle B eine relative Optimierung dadurch erreicht, daß der Fräser b dort mit nb = 40 U/min dreht, was eine Standzeit tb dieses Fräsers b von 600 min bewirkt.

Würde man dagegen die Kurbelwellendrehzahl nKW auf z. B. 17 U/min steigern, so müßte deshalb die Drehzahl na des Fräsers a auf 140 U/min gehoben werden, und es würde sich eine Standzeit ta von lediglich noch 950 min ergeben.

Allerdings könnte sich dadurch für den Fräser b, der dann beispielsweise mit einer Drehzahl von 50 U/min drehen würde, eine Standzeit von 700 min ergeben.

In der Summe wäre damit die Standzeit der Werkzeuge mit 950 + 700 = 1.650 min um 50 min höher als bei dem vorbekannten Verfahren, bei dem sich lediglich 1.000 + 600 = 1.600 min ergaben.

Zusätzlich ist die kleinste vorhandene Standzeit der gleichzeitig in Arbeit befindlichen Fräser a, b von 600 auf 700 min gestiegen, was bedeutet, daß bei Beginn der Bearbeitung mit zwei neuen Fräsern a, b das erste Mal erst nach 700 und nicht nach 600 min ein Fräser gewechselt werden muß, was bei der Reduzierung der Werkzeugwechselhäufigkeit über die Maschine insgesamt als Optimierungsziel eine Rolle spielen könnte.

Die Gegebenheiten der vorliegenden Patentanmeldung werden im folgenden anhand der Figuren beispielhaft näher erläutert. Es zeigen:
- Fig. 1a:: eine Aufsicht auf eine Maschine. welche an zwei Stellen gleichzeitig eine Kurbelwelle bearbeitet,
- Fig. 1b:: die Maschine gemäß Fig. 1a, betrachtet in axialer Richtung,
- Fig. 2:: eine Prinzipdarstellung der Spanabnahme,
- Fig. 3:: eine Prinzipdarstellung bei Bearbeitung an zwei verschiedenen Hublagerzapfen,
- Fig. 4:: eine Prinzipdarstellung bei der Bearbeitung der Wangenstirnfläche,
- Fig. 5:: Detaildarstellungen zur Spanform,
- Fig. 6:: eine Darstellung der Optimierung über zwei Bearbeitungsstellen, und
- Figuren 7 und 8:: Darstellungen des Standzeitverlaufes über die Drehzahl bzw. Schnittgeschwindigkeit.

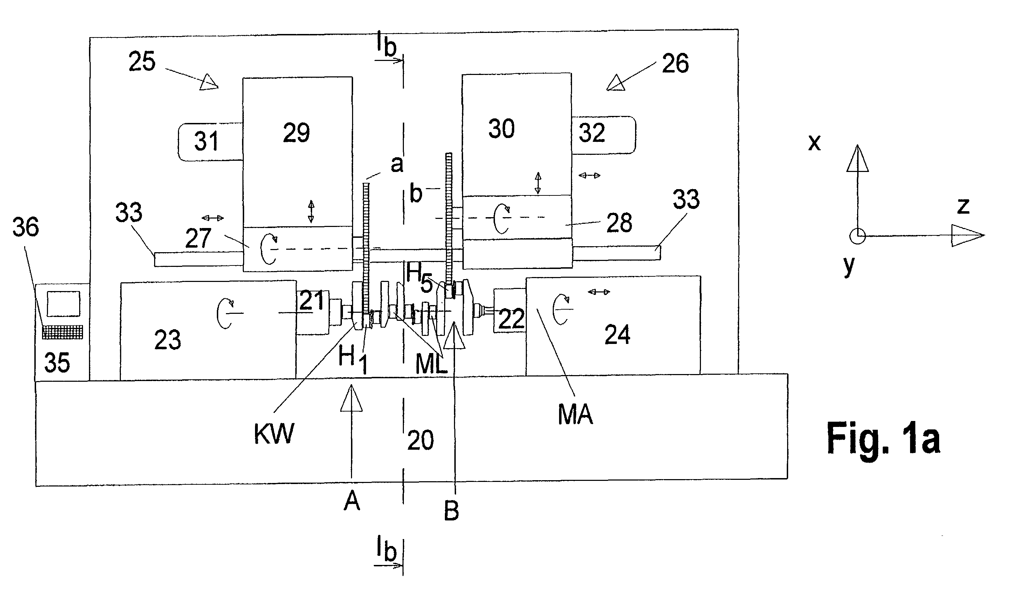

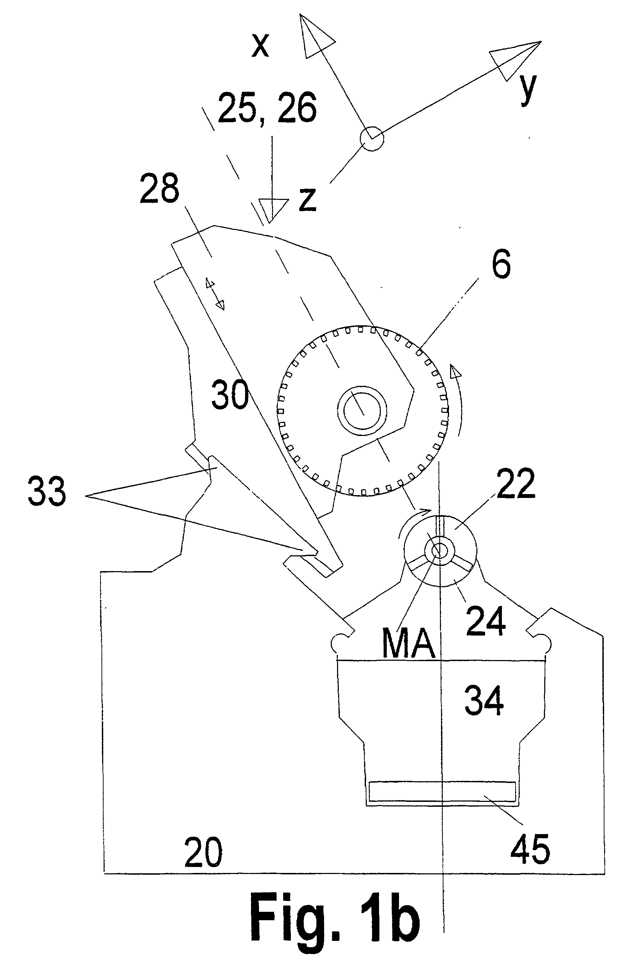

Die in den Figuren 1a und 1b dargestellte Fräsmaschine umfaßt ein Bett 20 mit einer Spänewanne 34 und einem darin untergebrachten Späneförderer 45. Über der Spänewanne 34 sind in Z-Richtung beabstandet und gegeneinandergerichtet zwei Spindelstöcke 23, 24 aufgesetzt, von denen wenigstens der eine Spindelstock 24 in Z-Richtung verfahrbar ist.

Die Spindelstöcke tragen wiederum gegeneinander gerichtete Futter 21, 22, welche drehend antreibbar sind und in ihrer Drehung miteinander wenigstens elektronisch, evtl. mechanisch, synchronisiert sind.

Zwischen den beiden Futtern 21, 22 ist eine Kurbelwelle KW eingespannt, welche vom Futter 21 an ihrem Endflansch und vom Futter 22 an ihrem Endzapfen, also auf der Mittelachse MA der Kurbelwelle KW, welche damit mit der Spindelstockachse zusammenfällt, gespannt ist. Die Spannflächen, also die Umfangsflächen am Endflansch und am Endzapfen, sind dabei vorbearbeitet, insbesondere spanend vorbearbeitet, und zusätzlich sind zum Einlegen der Kurbelwelle in die Spannfutter in einer definierten Drehlage entsprechende Anschlagflächen vorbearbeitet an der Kurbelwelle vorhanden.

Da die Spindelstöcke 23, 24 die Kurbelwelle nicht nur drehend antreiben. sondern auch in ihrer Drehlage positionieren können (ausgebildete C-Achse) ist die darin gespannte Kurbelwelle KW jederzeit während der Bearbeitung in die gewünschte Drehlage bringbar, und dies mit einer definierten Geschwindigkeit.

In Blickrichtung der Fig. 1a hinter der Spänewanne 34 und von dieser aus schräg nach hinten ansteigend sind auf dem Bett 20 der Fräsmaschine Z-Führungen 33 angeordnet, auf welchen die in Fig. 1a sichtbaren Unterschlitten 29, 30 der Werkzeugsupporte 25, 26 in Z-Richtung verfahrbar sind.

Auf jedem der Unterschlitten 29, 30 läuft ein Oberschlitten 27, 28, welcher jeweils einen Scheibenfräser a, b um eine zur Z-Achse parallele Achse drehend antreibbar trägt.

Der Oberschlitten 27, 28 ist dabei relativ steil von oben her, unter einem Winkel von weniger als 45° zur Senkrechten, in X-Richtung auf die Mittelachse MA bewegbar. Die X-Führungen zwischen Oberschlitten 27, 28 und den Unterschlitten 29, 30 stimmt dabei vorzugsweise mit der Verbindung der Mittelpunkte der Scheibenfräser a bzw. b und der Mittelachse MA überein.

Um mit einer derartigen Fräsmaschine mit einem außen verzahnten Scheibenfräser den Umfang eines Hublagerzapfens H1, H2 über den gesamten Umfang bearbeiten zu können, muß die auf der Mittelachse MA gespannte Kurbelwelle 1 während der Bearbeitung mindestens eine vollständige Umdrehung vollziehen.

Wie am besten anhand von Fig. 1a nachvollziehbar ist, werden während der Drehung der Kurbelwelle 1 mit Hilfe der Werkzeugsupporte 25, 26 die gleichzeitig im Einsatz an unterschiedlichen Bearbeitungsstellen befindlichen Scheibenfräser a, b in X-Richtung ständig nachgeführt.

Wie später im Detail erläutert werden wird, sind somit die Bewegungen der beiden Werkzeugsupporte 25, 26 indirekt voneinander abhängig, indem sie von der Drehung der gemeinsam bearbeiteten Kurbelwelle und der Geometrie der zu bearbeitenden exzentrischen Flächen abhängen.

Wenn dabei Optimierungen der Bearbeitung durch diese mehreren unabhängig voneinander steuerbaren Supporte vorgenommen werden sollen, beispielsweise im Hinblick auf eine bestimmte Spandicke oder eine in der Summe für die Kurbelwelle optimal langen Werkzeugstandzeit, bewegen sich die Scheibenfräser a, b nicht nur in X-Richtung unterschiedlich, sondern drehen sich großenteils auch mit unterschiedlichen, ständig angepaßten Drehzahlen.

Die Fräser a, b als auch deren Supporte 25, 26 und die Drehung der Spindelstöcke, also der Kurbelwelle KW. gemeinsam steuernde Maschinensteuerung kann zusätzlich über ein Eingabefeld 36 an der Maschine aufgrund des in der Praxis ermittelten Bearbeitungsergebnisses der ersten Stücke einer Werkstückserie mit Korrekturwerten nachkorrigiert werden.

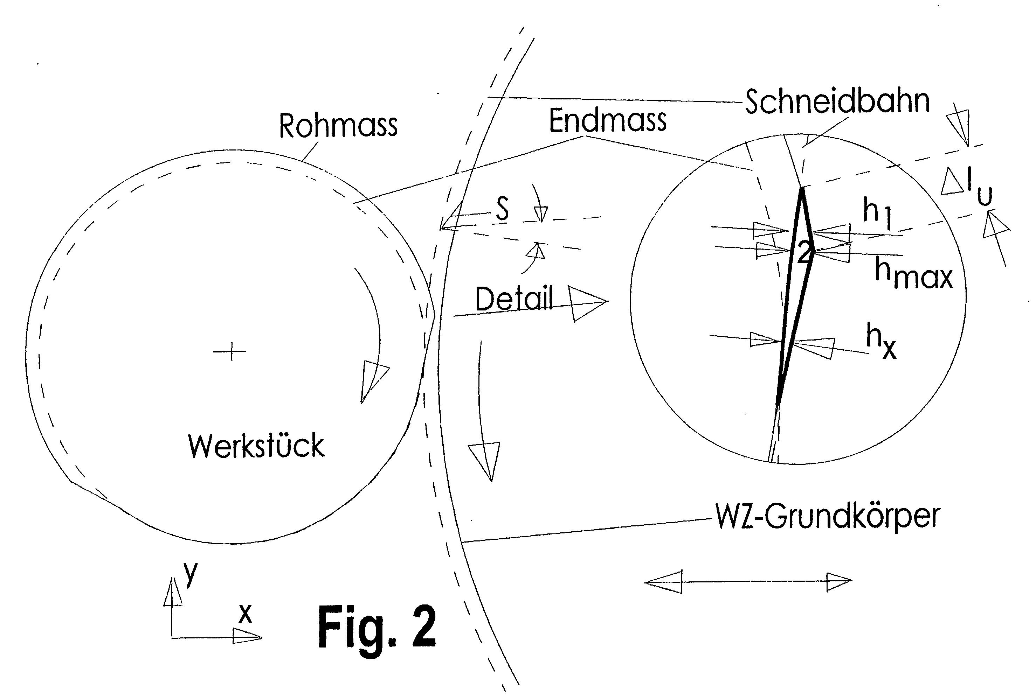

Fig. 2 zeigt in Blickrichtung der Z-Achse die grundsätzliche Situation der Bearbeitung einer Umfangsfläche, beispielsweise des Zapfens einer Kurbelwelle, aber auch einer unrunden Umfangsfläche, mittels Außenfräsen. Eine Vergrößerung der Bearbeitungsstelle ist im rechten Teil der Fig. 2 dargestellt.

Das Werkstück soll von dem größeren Rohmaß auf das kleinere Endmaß bearbeitet werden.

Dabei stehen die Schneiden S, von denen nur eine eingezeichnet ist, über den Werkzeuggrundkörper radial vor, um diesen Abtrag bewirken zu können. Der Werkzeuggrundkörper ist dabei in X-Richtung definiert verfahrbar und rotiert gegen den Uhrzeigersinn. Da das Fräsen im Gleichlauf geschehen soll, rotiert das Werkstück im Uhrzeigersinn, so daß sich an der Bearbeitungsstelle Werkzeug und Werkstück in die gleiche Richtung bewegen.

Wie die vergrößerte Darstellung zeigt, wird die neue Schneide S einen Span 2 erzeugen, der durch zwei konvexe und ein konkaves Bogensegment im Querschnitt begrenzt wird, und die Form eines flachen, unregelmäßigen Dreiecks, besitzt.

Dabei ist die konkave Seite die durch den vorhergehenden Schnitt erzeugte Flanke, und die lange konvexe Seite, die durch den die neue Schneide S erzeugte Flanke. Die kurze konvexe Flanke ist die entlang des Umfanges des Zweigstückes gemessene Länge Δlᵤ, also die Umfangslänge zwischen dem Auftreffen von zwei hintereinander angeordneten Schneiden des Werkzeuges auf dem Umfang des Werkstückes.

In der Praxis behält der Span 2 natürlich nicht die aus Fig. 2 ersichtliche Form bei, sondern wird aufgrund der Ablenkung an der Spanfläche der Schneide spiralig aufgerollt.

Aus Fig. 2 ist zu erkennen, daß der Span 2 - in Durchlaufrichtung der Schneide betrachtet - zunächst in seiner Spandicke, z. B. h₁, schnell zunimmt bis zur maximalen Spandicke hₘₐₓ. Von dort aus nimmt die Spandicke relativ langsam bis zum Ende kontinuierlich (z. B. hₓ) ab.

Aus dieser Darstellung ist ersichtlich - wenn die Differenz zwischen Rohmaß und Endmaß gleich bleibt und die Drehgeschwindigkeit des Werkstückes ebenfalls gleich bleibt - daß eine Verringerung der Drehgeschwindigkeit des Werkzeuges eine Vergrößerung des Schnittabstandes Δlᵤ bewirkt, und damit auch eine Vergrößerung von hₘₐₓ.

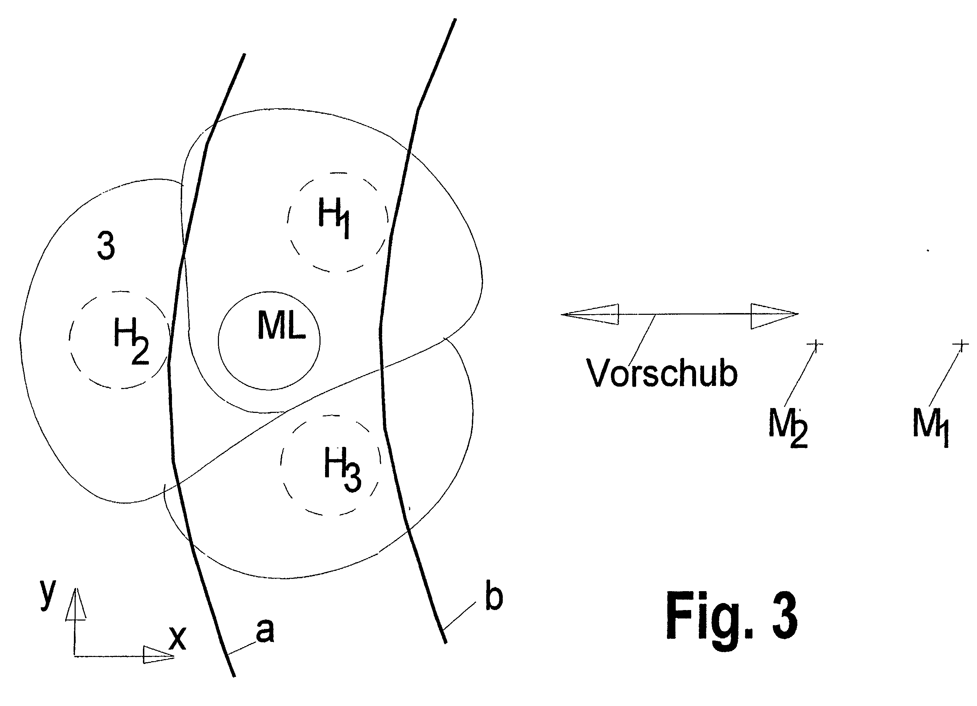

Fig. 3 stellt - wiederum in Z-Richtung betrachtet - z. B. eine Kurbelwelle für einen 6-Zylinder-Reihenmotor mit drei in ihrer Drehlage zum Mittellager ML unterschiedlich positionierten Hubzapfen H1-H3 dar.

An dieser Kurbelwelle sind - an unterschiedlichen axialen Positionen - zwei separate Werkzeuge, beispielsweise scheibenförmige Außenfräser (a, b) im Einsatz. Eins der Werkzeuge könnte beispielsweise den Hubzapfen H1, das andere den Hubzapfen H2 bearbeiten, wie in Fig. 3 dargestellt, aber ebenso könnte eines der Werkzeuge einen Hubzapfen, das andere der Werkzeuge die Stirnfläche einer Wange bearbeiten.

In letzterem Fall könnte theoretisch die Wangenbearbeitung teilweise bei stillstehender Kurbelwelle erfolgen, indem sich das betreffende Werkzeug a oder b in Vorschubrichtung, also in X-Richtung, die Stirnfläche der Wange entlangarbeitet. Da bei Stillstand der Kurbelwelle jedoch an der an anderer axialer Position stattfindenden Bearbeitung einer Mantelfläche, sei es eines Hubzapfens H oder eines Mittellagers ML, kein Bearbeitungsfortschritt erzielbar ist, wird auch die Bearbeitung der Wangenfläche vorzugsweise bei drehender Kurbelwelle erfolgen.

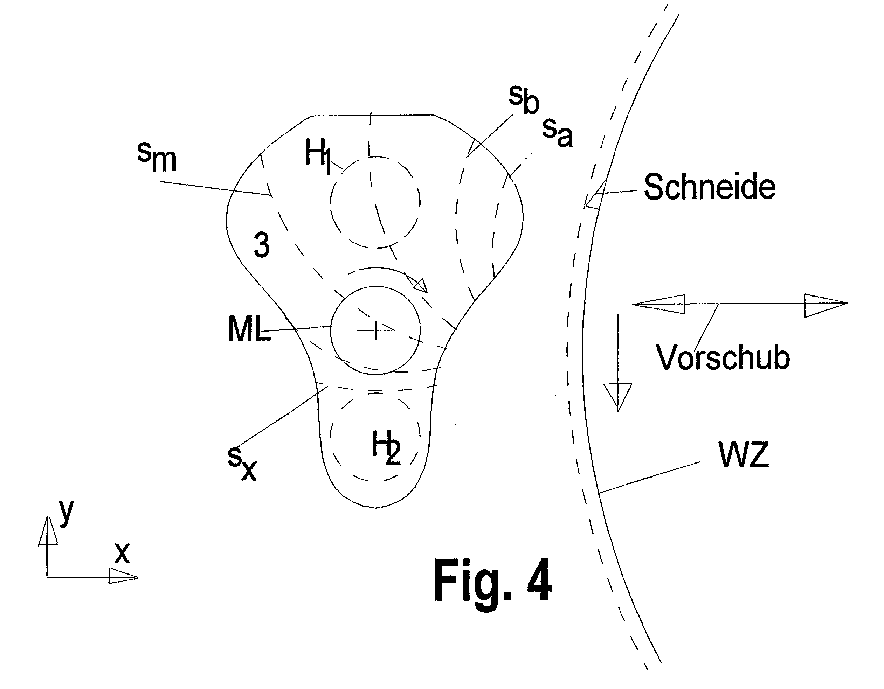

Dabei ergeben sich - bei einem Beginn der Wangenbearbeitung in der in Fig. 3 dargestellten Position der Kurbelwelle und anschließendem Weiterdrehen der Kurbelwelle - Schneidbahnen sₐ, s_{b}, sₘ, s_{y}, von denen einige in Fig. 4 eingezeichnet sind.

Wie ersichtlich, haben diese Schneidbahnen - wegen des Gleichlaufes des Fräsers - mit der Werkstückdrehung - an ihrem Beginn einen größeren Abstand voneinander als an ihrem Ende, also dem Punkt des Auslaufens der Schneide aus der Wangenseitenfläche.

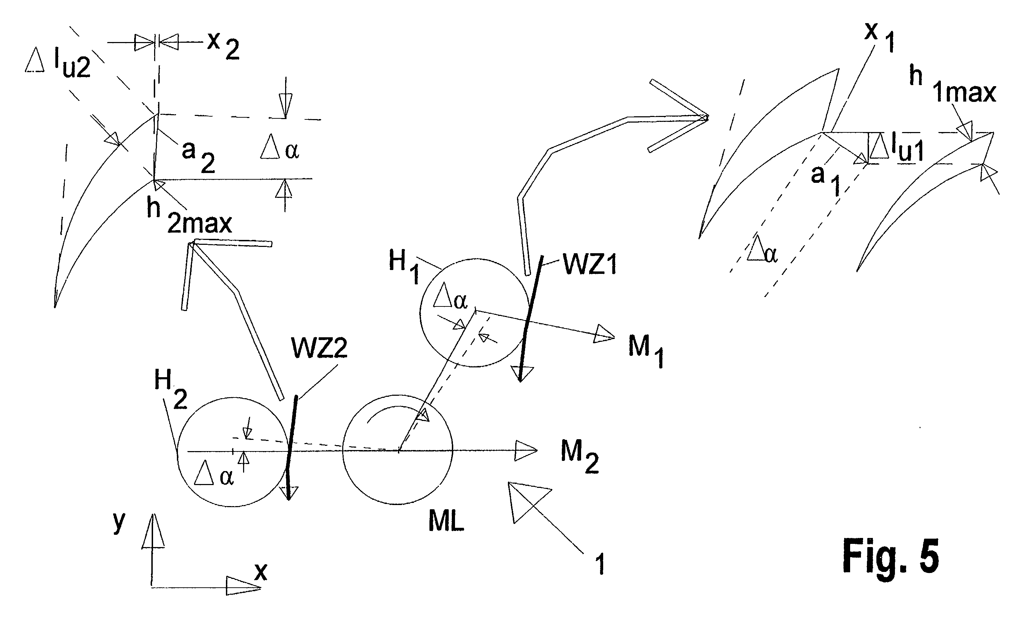

Fig. 5 zeigt die detaillierteren Zusammenhänge auf, wenn zwei separate Werkzeuge WZ1, WZ2 zwei verschiedene Hubzapfen H1, H2 gleichzeitig bearbeiten. Die Werkzeuge WZ1 und WZ2 können unabhängig voneinander in X-Richtung definiert verfahren und in ihrer Drehzahl gesteuert werden. Die verbindende Größe ist jedoch die Drehung der um die Mittellager ebenfalls gesteuert drehbar angetriebenen Kurbelwelle als Werkstück. welche bei bestimmten Arbeitsoperationen auch angehalten werden kann.

In der in Fig. 5 dargestellten Situation befindet sich Hubzapfen H2 auf einer Linie mit dem Mittellager ML1 und dem Mittelpunkt M₁ und M₂ der Werkzeuge WZ1 oder WZ2. Der Hubzapfen H1 ist gegenüber dem Mittellager um ca. 120° in Uhrzeigerrichtung versetzt.

Wenn - wie angegeben - die Werkzeuge WZ1 und WZ2 jeweils im GegenUhrzeigersinn rotieren, und die Kurbelwelle - wie an deren Mittellager ML eingezeichnet - im Uhrzeigersinn, wird ersichtlich an dem Hublager H1 im Gleichlaufverfahren gefräst, was aus den oben angegebenen Gründen gewünscht wird.

Am Hublager H2 könnte der Eindruck entstehen, daß es sich hier um ein Gegenlauffräsen handelt, da sich das Werkzeug WZ2 an dieser Stelle nach unten bewegt, der Hubzapfen H2 jedoch nach oben.

Auf die Absolutbewegung des Hubzapfens kommt es jedoch bei der Beurteilung, ob Gleichlauf- oder Gegenlauffräsen vorliegt, nicht an, sondern darauf, ob das Hublager H2 relativ um seinen Mittelpunkt eine Drehung vollzieht, die seine Oberfläche an der Bearbeitungsstelle immer in der gleichen Richtung bewegen läßt wie den Fräser.

Der in Fig. 5 - absolut betrachtet - nach oben wandernde Hubzapfen H2 rollt jedoch ersichtlich entlang des Werkzeuges WZ2 nach oben ab, so daß also relativ zum Mittelpunkt des Hublagers H2 eine Drehung des Hublagers im Uhrzeigersinn stattfindet und damit an der Bearbeitungsstelle de facto Gleichlauf herrscht.

Fig. 5 zeigt ferner den zwangsweise vorhandenen Zusammenhang zwischen der Bearbeitung an den beiden Hublagern H1 und H2, die vor allem bei der Optimierung von mehreren gleichzeitig ablaufenden Bearbeitungsvorgängen im Hinblick z. B. auf eine bestimmte Spandicke zu berücksichtigen ist:

Es sei angenommen, daß sich der Fräser WZ2 in Relation zur Kurbelwelle 1 - von welcher in Fig. 5 nur das Mittellager ML und die zwei momentan bearbeiteten Hubzapfen H1 und H2 der Übersichtlichkeit halber dargestellt sind - so schnell relativ zueinander drehen, daß zwischen dem Eingriff zweier aufeinanderfolgender Schneiden des Werkzeuges WZ2 am Hublager H2 die Kurbelwelle um den Winkel Δα weitergedreht wurde. Da in Fig. 5 der Mittelpunkt des Hublagers H2 und der Mittelpunkt der Kurbelwelle, also des Mittellagers ML, auf einer Linie mit der Mitte M2 des Werkzeuges WZ2 liegen. bewirkt der Schwenkwinkel Δα einen Versatz a₂ des Auftreffpunktes der neuen Schneide gegenüber der alten Schneide, der fast genau in Y-Richtung verläuft.

Dadurch muß nur eine sehr geringe X-Komponente x₂ durch entsprechende X-Bewegung des Werkzeuges WZ2 erfolgen, und der sich ergebende Schnittabstand Δlᵤ₂ bedingt einen Spanquerschnitt, dessen Dicke der optimalen Spandicke entsprechen soll.

An der Bearbeitungsstelle des Hublagerzapfens H1 soll ebenfalls möglichst die gleiche Spandicke erzielt werden. Auch der Mittelpunkt des Hublagerzapfens H₁ ist - gleiche Drehzahl und gleichen Durchmesser der Werkzeuge WZ1 und WZ2 vorausgesetzt - um den Winkelbetrag Δα gegenüber der Mitte des Hublagers verschwenkt worden, bis vom Werkzeug WZ1 die nächste Schneide in Eingriff gelangt.

Der an der Bearbeitungsstelle dadurch bewirkte Versatz a₁ ist dabei größer als a₂, da der Abstand von der Mitte des Mittellagers ML zur Bearbeitungsstelle am Hublager H1 geringfügig größer ist als zur Mitte des Hublagers H₁. Dieser Versatz a₁ besitzt eine ausgeprägte Komponente x₁ in X-Richtung, die durch entsprechende Bewegung des Werkzeuges WZ1 in X-Richtung ausgeglichen werden muß. Damit bleibt von a₁ nur ein relativ geringer Anteil als Schnittabstand Δlᵤ₁ in Y-Richtung übrig. Dies würde den in Fig. 5 rechts außen dargestellten dünnen Span mit einer Maximaldicke von nur h₁ₘₐₓ ergeben, welche sehr viel geringer ist als die optimale Spandicke.

Um auch an dieser Bearbeitungsstelle auf die optimale Spandicke zu kommen, muß die Drehzahl des Werkzeuges WZ1 gegenüber der Drehzahl von WZ2 so reduziert werden, daß der Schnittabstand Alᵤ₁ soweit ansteigt, bis die gewünschte Spandicke auch am Hublagerzapfen H₁ erreicht wird. Dabei ist eine Reduzierung der Drehzahl von Werkzeug WZ1 auf bis zu etwa 30 % der Drehzahl von Werkzeug WZ2 notwendig.

Neben dem beschriebenen ersten Optimierungsziel einer bestimmten - mittleren oder maximalen - Spandicke könnte das sekundäre Optimierungsziel eine Schnittgeschwindigkeit sein, die sich innerhalb eines vorgegebenen Zielkorridors bewegen soll oder einen bestimmten Maximalwert nicht überschreiten soll.

Die in Fig. 5 dargestellten gegenseitigen Abhängigkeiten, vor allem bei Einhaltung einer bestimmten Spandicke treten verstärkt dann auf, wenn eine von mehreren gleichzeitigen Bearbeitungsstellen an der Kurbelwelle die Bearbeitung einer Stirnfläche einer Wange ist, wie in Fig. 4 dargestellt. Die Darstellung in Fig. 4 zeigt eine Kurbelwelle z. B. für einen Vierzylinder-Reihenmotor, bei der sich in radialer Richtung die Hubzapfen H1 und H2 bezüglich des Mittellagers ML gegenüberstehen.

Wenn in der in Fig. 4 dargestellten Position mit der Bearbeitung der Wangenfläche 3 durch das Werkzeug WZ begonnen würde, würde sich die Kurbelwelle um die Mitte des Mittellagers ML weiter in der angegeben Richtung (im Uhrzeigersinn) drehen, während das Werkzeug WZ gegen den Uhrzeigersinn dreht, um Gleichlauffräsen zu erzielen.

Auf der Wangenfläche 3 sind einige der sich dadurch ergebenden Schneidbahnen sₐ, s_{b}, sₘ, sₓ eingezeichnet.

Wegen der gleichzeitigen Drehung der Kurbelwelle ergeben sich dadurch Spanquerschnitte, die wiederum am Beginn des Spanes deutlich größer sind als gegen Ende des Spanes, und zusätzlich unterscheiden sich die Späne stark in der Spanlänge, abhängig von der jeweiligen Lage der Schneidbahn auf der Wangenfläche 3.

Auf eine Drehung der Kurbelwelle kann in der Regel nicht vollständig verzichtet werden, da sonst ein an anderer Stelle der Kurbelwelle gerade stattfindende Bearbeitung eines Lagerzapfens keinen Bearbeitungsfortschritt mehr zeitigen würde.

Wenn somit an einer Kurbelwelle gleichzeitig mehrere Wangenseitenflächen oder eine Wangenseitenfläche gleichzeitig mit der Bearbeitung eines Lagerzapfens stattfindet, treten die am Beispiel der Fig. 5 dargestellten Diskrepanzen der Spandicken zwischen den verschiedenen Bearbeitungsstellen bei gleichen Drehzahlen und Durchmessern aller Werkzeuge verstärkt auf, so daß verstärkt die Drehzahlen, und/oder bei Wangenbearbeitung auch die Bewegung in Querrichtung, also X-Richtung durch den Fräser, ständig verändert werden müssen, um in jeder Phase der Bearbeitung und an allen Bearbeitungsstellen gleichzeitig die gewünschte optimale Spandicke einzuhalten.

Höchstwahrscheinlich wird jedoch das erste Optimierungsziel die Standzeit der Schneiden sein, da einerseits die durch das Auswechseln der Werkzeuge bedingte Totzeit der Anlage und andererseits die Kosten für das Ersatzwerkzeug selbst der die Effizienz der Anlage am stärksten beeinflussende Faktor sind. Das Einhalten einer bestimmten Bandbreite für die mittlere Spandicke bzw. das Nichtüberschreiten einer maximalen Spandicke wird mangels anderer Indikatoren ersatzweise häufig als Hilfsparameter zum Verbessern der Standzeit gewählt. Dabei kommt es vor allem darauf an, daß die Standzeit der Werkzeuge insgesamt möglichst hoch ist. Dies kann bedeuten:
- wenn z. B. mit zwei Scheibenfräsern die sechs oder auch mehr Lagerstellen einschließlich der angrenzenden Wangenstirnflächen bearbeitet werden, eine möglichst große Standzeit jedes einzelnen der beiden meist gleichzeitig im Einsatz befindlichen Werkzeugeinheiten a, b bzw. WZ1, WZ2 oder
- eine Optimierung der Standzeit dahingehend, daß die zwei oder auch mehr auf einer Maschine vorhandenen Werkzeuge a, b ... möglichst zum gleichen Zeitpunkt verschlissen sind und gewechselt werden können (Maximierung der zeitlichen Wechselabstände).

Da die Werkzeuge a, b nicht unbedingt gleichmäßig schnell verschleißen, aufgrund nicht ganz symmetrischen Aufbaus der Kurbelwelle bzw. der Rohlinge für die Kurbelwelle bedeutet dies unter Umständen, daß nicht jedes einzelne der Werkzeuge a, b, c im Hinblick auf eine für sich betrachtet möglichst lange Standzeit während der Bearbeitung optimiert wird, sondern unter Umständen die bei optimaler Bearbeitung langsamer verschleißenden Werkzeuge, z. B. das Werkzeug b. bewußt abtragsintensiver. z. B. mit höherer Schnittgeschwindigkeit etc., oder größerer Spandicke, gefahren wird. da ein Hinauszögern der Verschleißgrenze dieses Werkzeuges b über den Verschleißzeitpunkt des Werkzeuges a nicht sinnvoll ist.

Auf diese Art und Weise kann erreicht werden, daß alle auf einer Maschine befindlichen Werkzeuge, also a, b ..., gemeinsam gewechselt werden.

Zu diesem Zweck ist es unter Umständen auch notwendig, Bearbeitungen, die im Hinblick auf eine kürzestmögliche Bearbeitungszeit von ohnehin schneller verschleißendem Werkzeug a geleistet wurden, gezielt vom Werkzeug b durchführen zu lassen.

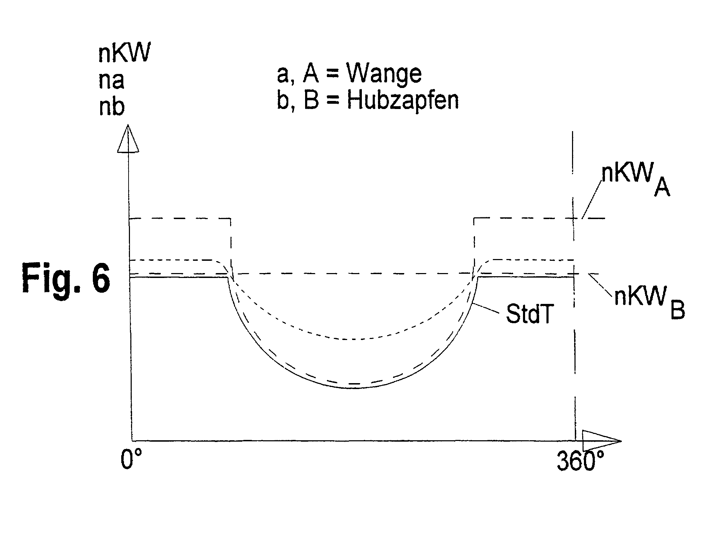

Fig. 6 zeigt einen bestimmten Bearbeitungszustand an einer Kurbelwelle, bei dem die Kurbelwelle gleichzeitig an zwei Bearbeitungsstellen A, B von Werkzeugen a, b bearbeitet wird. Die Bearbeitungsstelle A ist dabei die Bearbeitung einer Wangenstirnfläche (evtl. zusammen mit der angrenzenden Hublagerfläche), während die Bearbeitungsstelle B die Bearbeitung eines Hublagerzapfens ist. Für jede Bearbeitungsstelle allein betrachtet, würde sich für die Bearbeitungsstelle B, also die Bearbeitung des Hublagerzapfens, über eine gesamte Umdrehung der Kurbelwelle eine immer gleichmäßige optimale Drehzahl nkw_{B} ergeben.

Die entsprechende Kennlinie für die optimale Drehzahl der Kurbelwelle allein für die Bearbeitungsstelle A, also die Wangenbearbeitung, welche mit nkw_{A} bezeichnet ist, hat dagegen die Form eines umgekehrten Hutes, und verläuft zum Teil unterhalb und zum Teil oberhalb der Optimaldrehzahl für den Bearbeitungsfall B.

Dabei ist insbesondere von gleichen Fräserdrehzahlen (na = nb) ausgegangen.

Da eine übereinstimmende Kurbelwellendrehzahl festgelegt werden muß, ist es bereits bekannt, die sich bei jeder Winkelstellung ergebende tiefere Drehzahl zu wählen, wie mit durchgezogener Linie als Stand der Technik (StdT) eingezeichnet.

Entsprechend würde bei der Optimierungsweise des Standes der Technik diese Drehzahl nkw_{B} gewählt werden, mit der Folge, daß sich für die Bearbeitungsstelle B ein Optimierungsgrad von 100 %, für die Bearbeitungsstelle A jedoch nur von 70 % ergeben würde.

Durch die erfindungsgemäße Optimierungsweise würde zwar - z. B. im Bereich knapp oberhalb von 0° Kurbelwellenstellung - durch die für die Bearbeitungsstelle B zu hohe Drehzahl der Optimierungsgrad an dieser Bearbeitungsstelle B verschlechtert, dagegen für die Bearbeitungsstelle A verbessert, und zwar um einen größeren Betrag als die Verschlechterung bei B. In der Summe über die Bearbeitungsstellen A, B, ... würde sich damit jedoch eine bessere Optimierung ergeben als bei der Optimierungsweise nach dem Stand der Technik.

Fig. 6 zeigt lediglich die Abhängigkeit der Kurbelwellendrehzahl von der Kurbelwellenstellung. Unabhängig von der Kurbelwellendrehzahl nKW kann jedoch auch die Fräserdrehzahl na der an den Bearbeitungsstellen A, B wirkenden Fräser a, b verändert werden.

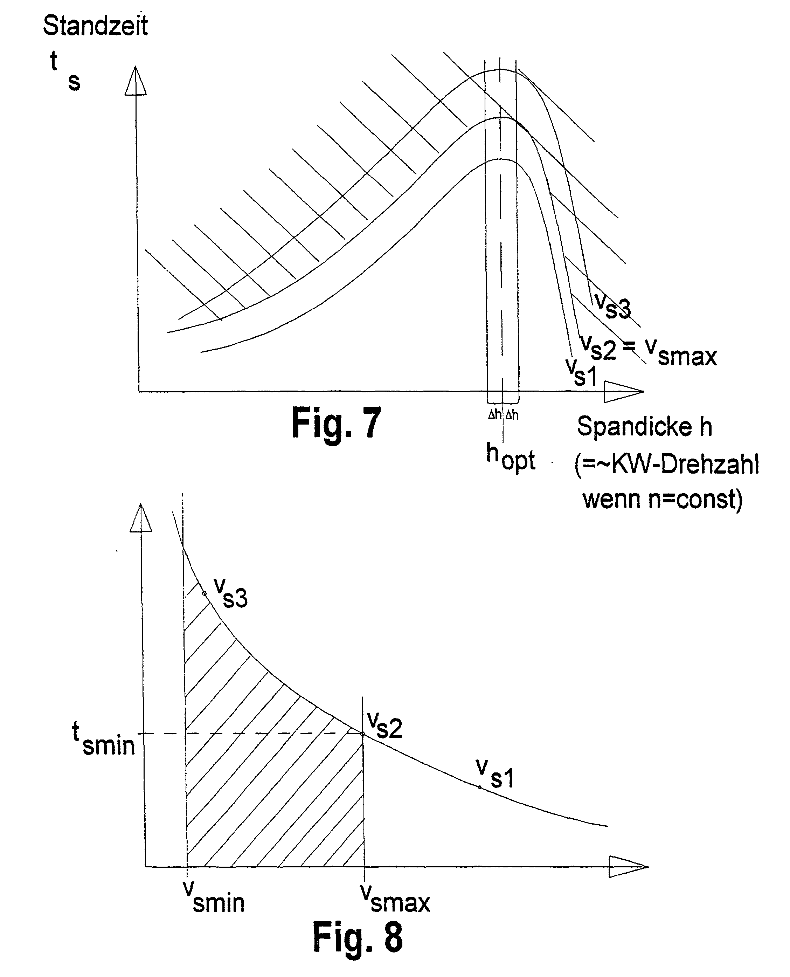

Die Figuren 7 und 8 zeigen dabei die Zusammenhänge zwischen Standzeit ts, Spandicke h sowie Schnittgeschwindigkeit vₛ auf.

Wie Fig. 7 zeigt, ergibt die Standzeit tₛ aufgetragen über der Spandicke h eine unsymmetrische, kappenförmige Kurve, so daß die Standzeit tₛ ein relatives Maximum bei einer Spandicke hₒₚₜ erreicht. Im Bereich l-Ah, in dem diese kappenförmige Kurve noch relativ flach abfällt, ist die Standzeit tₛ noch annähernd optimal.

Dabei entspricht die Spandicke h (wobei es nur eine untergeordnete Rolle spielt, ob man von der maximalen Spandicke hₘₐₓ oder der durchschnittlichen Spandicke eines Spanes ausgeht) der Kurbelwellendrehzahl nKW, sofern die Fräserdrehzahl konstant bleibt.

Jede der kappenförmigen Kurven in Fig. 7 entspricht einer bestimmten Schnittgeschwindigkeit vₛ.

Denn wie Fig. 8 zeigt, herrscht zwischen der Standzeit tₛ einerseits und der Schnittgeschwindigkeit vₛ andererseits eine umgekehrt exponentielle Beziehung, so daß also die Standzeit mit abnehmender Schnittgeschwindigkeit stark verbessert werden kann.

Die Situation gemäß Fig. 7 gilt - sofern der Durchmesser der einzelnen Hublagerzapfen identisch ist - in gleicher Weise für alle Hubzapfen einer zu bearbeitenden Kurbelwelle.

Soll nun die Standzeit der Werkzeuge in der Summe über alle Bearbeitungsstellen, wenigstens jedoch über die beiden gleichzeitig bearbeiteten Bearbeitungsstellen A, B optimiert werden, so wird wie folgt vorgegangen:

Als Mindestforderung wird in der Kurve gemäß Fig. 8 eine untere Grenze der Standzeit tₛ vorgegeben, welche gemäß Fig. 8 einer bestimmten Schnittgeschwindigkeit vₛ₂ entspricht. Für die Bearbeitung zugelassen soll somit nur der schraffierte Bereich, also vₛ ≤ vₛₘₐₓ, sein. Dies entspricht in Fig. 7 der Kurvenschar von vₛ₂ und darüber.

Für die Optimierung an den gleichzeitig bearbeiteten Bearbeitungsstellen A. B, ... wird nun so vorgegangen, daß z. B. für die Bearbeitungsstelle A in Fig. 7 die Kurve mit der größten noch zulässigen Schnittgeschwindigkeit (vₛ₂) ausgewählt wird, und dort wiederum der Punkt mit der höchsten Standzeit, also entsprechend der Spandicke hₒₚₜ. Bei der somit feststehenden Spandicke hₒₚₜ und der nun ebenfalls feststehenden Schnittgeschwindigkeit vₛ₂ ergibt sich zwingend eine Kurbelwellendrehzahl nKW_{A} für diese Bearbeitungsstelle A. Wie Fig. 7 zeigt, liegen die Höchstpunkte der Kurvenschar tₛ = f(h) im wesentlichen vertikal übereinander.

Aus Gründen der Standzeitoptimierung soll nun auch für die Bearbeitungsstelle B die Spandicke hₒₚₜ gewählt werden. Wegen der bereits feststehenden Kurbelwellendrehzahl nKW_{B} = nKW_{A} ergibt sich zwingend in Fig. 7 eine bestimmte Kurve aus der Kurvenschar. Handelt es sich um eine im zulässigen Bereich liegende Kurve, z. B. Vₛ₃. so wird die dieser Schnittgeschwindigkeit Vₛ₃ entsprechende Fräserdrehzahl nb gewählt, und mit den nun bekannten Parametern nKW, na, nb die gleichzeitige Bearbeitung an den Bearbeitungsstellen A, B vorgenommen.

Ergibt sich jedoch eine nicht zulässige Schnittgeschwindigkeit in Form z. B. der Kurve Vₛ₁ in Fig. 7 für die Bearbeitungsstelle B. so wird statt dessen die gerade noch zulässige Kurve vₛ₂ für die Bearbeitungsstelle B gewählt, mithin also an der Bearbeitungsstelle B zusammen mit der Schnittgeschwindigkeit zwingend auch die Kurbelwellendrehzahl nKW_{B} reduziert, da die Spandicke hₒₚₜ unverändert bleiben soll.

Wegen der Rückkopplung über die gemeinsame Kurbelwellendrehzahl bedeutet dies für die Bearbeitungsstelle A, daß für diese Bearbeitungsstelle A nicht wie ursprünglich willkürlich gesetzt in Fig. 7 die der Schnittgeschwindigkeit Vₛ₂ entsprechende Kurve gilt, sondern eine höher liegende Kurve, z. B. Vₛ₃. An der Bearbeitungsstelle A hat sich gegenüber der willkürlich gesetzten Ausgangssituation, also Schnittgeschwindigkeit und Kurbelwellendrehzahl, zugunsten der Beibehaltung der optimalen Spandicke reduziert.

Zusätzlich kann - wie Fig. 8 zeigt - die Schnittgeschwindigkeit vₛ nicht beliebig reduziert werden, da für den Fertigungsprozeß - in der Regel vom Kunden - eine maximale Taktzeit vorgegeben wird, innerhalb derer die Kurbelwelle fertigbearbeitet sein soll, woraus sich auch die maximal zur Verfügung stehende Zeit für die gleichzeitige Bearbeitung der Bearbeitungsstellen A. B ergibt. Dies bedingt die mindestens notwendige Schnittgeschwindigkeit Vₛₘᵢₙ in Fig. 8.

Eine zusätzliche Variationsmöglichkeit besteht noch darin, bei der Festlegung der Spandicke in Fig. 7 nicht exakt hₒₚₜ zu wählen, sondern sich in der Bandbreite zwischen hₒₚₜ ±Δh zu bewegen, wobei die Bereichsgrenzen ±Δh so zu wählen sind, daß innerhalb dieses Bereiches die Abnahme der Standzeit bedingt durch Abweichung von der optimalen Spandicke geringer ist als die Abnahme der Standzeit durch analoge Erhöhung der Schnittgeschwindigkeit (bei konstanter Kurbelwellendrehzahl nKW).

## Patentansprüche

1. Verfahren zum Steuern der Bearbeitung eines sich bewegenden Werkstückes, durch Drehfräsen eines sich drehenden Werkstückes, wie etwa einer Kurbelwelle, an mehreren Bearbeitungsstellen (A, B, ...) gleichzeitig durch getrennte Werkzeugeinheiten (a, b, ...),
**dadurch gekennzeichnet,** daß
in Kenntnis der für jede Bearbeitungsstelle (A. B) separaten optimalen Bewegungsparameter (nkwa, na, xa, ya, ...; nkwb, nb. xb, yb, ...) von Werkstück (KW) und Werkzeug (WZ) die Bewegungsgeschwindigkeit des Werkstückes, insbesondere die Drehzahl (nKWa, nKWb) der Kurbelwelle (KW), sowie die Bewegungsgeschwindigkeiten (na, xa, ya, ...;nb, xb, yb, ....) der Werkzeugeinheiten (a, b, ...) so gewählt werden, daß in der Summe (S) aller gleichzeitig bearbeiteten Bearbeitungsstellen (A, B,...) ein optimales Bearbeitungsergebnis hinsichtlich Werkstückqualität und Werkzeugstandzeit erzielt wird.

2. Verfahren nach Anspruch 1,
**dadurch gekennzeichnet,** daß
die Bearbeitung eine spanende Bearbeitung ist.

3. Verfahren nach einem der vorhergehenden Ansprüche,
**dadurch gekennzeichnet,** daß
die Bewegung des Werkstückes eine Drehung des Werkstückes um die eigene Achse ist.

4. Verfahren nach einem der vorhergehenden Ansprüche,
**dadurch gekennzeichnet,** daß
das Optimierungsziel eine in der Summe (S) möglichst große Werkzeugstandzeit ist.

5. Verfahren nach einem der vorhergehenden Ansprüche,
**dadurch gekennzeichnet,** daß
das Optimierungsziel das Erreichen eines möglichst großen zeitlichen Abstandes zwischen den Werkzeugwechsel-Vorgängen an der mit gleichzeitig arbeitenden verschiedenen Werkzeugeinheiten (a, b, ...) arbeitenden Werkzeugmaschine ist.

6. Verfahren nach einem der vorhergehenden Ansprüche,
**dadurch gekennzeichnet,** daß
die eingestellten Bewegungsparameter, insbesondere die eingestellte Drehzahl (nKW) der Kurbelwelle (KW) zwischen dem höchsten und dem niedrigsten der für die einzelnen Bearbeitungsstellen (A, B; ...) jeweils separat festgestellten optimalen Bewegungsgeschwindigkeiten (nKWa, nKWb, ...) liegt.

7. Verfahren nach einem der vorhergehenden Ansprüche,
**dadurch gekennzeichnet,** daß
die festgelegten Bewegungsparameter ungleich der für jede Bearbeitungsstelle separat betrachteten optimalen Bewegungsparameter (nKWa, na, xa, ya, ...; nKWb, nb, xb, yb, ...) sind.

8. Verfahren zum Steuern der Bearbeitung eines sich bewegenden Werkstückes, durch Drehfräsen eines sich drehenden Werkstückes, wie etwa einer Kurbelwelle, an mehreren Bearbeitungsstellen (A, B, ...) gleichzeitig durch getrennte Werkzeugeinheiten (a, b, ...), , wobei
in der Summe (S) aller gleichzeitig bearbeiteten Bearbeitungsstellen (A, B, ...) insgesamt eine möglichst große Werkzeugstandzeit erzielt werden soll,
**dadurch gekennzeichnet,** daß
- für jede der gleichzeitig bearbeiteten Bearbeitungsstellen (A, B, ...) eine Spandicke (H) im optimalen Bereich (hₒₚₜ |Ah) eingehalten wird, und
- dabei die Schnittgeschwindigkeiten (Vₛ) an den Bearbeitungsstellen (A, B, ...) so gewählt werden, daß unter Einhaltung der vorgegebenen Taktzeit für die Bearbeitung der Bearbeitungsstellen (A, B, ...) bzw. der gesamten Kurbelwelle (KW) die maximale Werkzeugstandzeit erzielt wird.

9. Verfahren nach Anspruch 8,
**dadurch gekennzeichnet,** daß
als Spandicke (h) die optimale Spandicke (hₒₚₜ) entsprechend der Beziehung Werkzeugstandzeit (tₛ = f(h)) gewählt wird,

10. Verfahren nach Anspruch 8 oder 9,
**dadurch gekennzeichnet,** daß
zu Beginn des Optimierungsvorganges eine maximal zulässige Schnittgeschwindigkeit (vₛₘₐₓ) entsprechend einer minimal einzuhaltenden Werkzeugstandzeit (tₛₘᵢₙ) vorgegeben wird.

11. Verfahren nach einem der Ansprüche 8 bis 10,
**dadurch gekennzeichnet,** daß
- zu Beginn der Optimierung für die erste (A) der gleichzeitig zu bearbeitenden Bearbeitungsstellen (A, B, ...) die maximal zulässige Schnittgeschwindigkeit (Vₛₘₐₓ) gesetzt wird,
- daraus die sich für die anderen Bearbeitungsstellen (B, ...) ergebenden Schnittgeschwindigkeiten (vₛ) ermittelt werden, und
- die Schnittgeschwindigkeiten (vₛ) für alle Bearbeitungsstellen (A, B, ...) angehoben, insbesondere um den gleichen Wert angehoben, werden falls eine der sich für die anderen Bearbeitungsstellen (B, ...) ergebenden Schnittgeschwindigkeiten oberhalb der zulässigen Grenze (Vₛₘₐₓ) lag.

12. Verfahren nach einem der vorhergehenden Ansprüche,
**dadurch gekennzeichnet,** daß
zu Beginn der Optimierung für die Schnittgeschwindigkeiten eine untere Grenze (Vₛₘᵢₙ), insbesondere in Abhängigkeit von der vorgegebenen Taktzeit, gesetzt wird.

## Claims

1. Method for controlling the machining of a moving workpiece by rotary milling a rotating workpiece, such as a crankshaft, at several machining locations, (A, B,...) simultaneously by separate tool units (a, b, ...),
**characterized** in that,
knowing the separate optimum movement parameters (nkwa, na, xa, ya, ...; nkwb, nb, xb, yb,...) of the workpiece (KW) and the tool (WZ) for each machining location (A, B), the rate of motion of the workpiece, particularly the rotational speed (nKWa, NKWb) of the crankshaft (KW), as well as the rates of motion (na, xa, ya, ...; nb, xb, yb, ...) of the tool units (a, b, ...) are chosen such that an optimum machining result concerning the workpiece quality and the tool life is achieved as the sum (S) of all simultaneously machined machining locations (A, B, ...).

2. Method according to claim 1,
**characterized** in that
the machining is a cutting process.

3. Method according to any one of the preceding claims,
**characterized** in that
the movement of the workpiece is a rotation of the workpiece about its own axis.

4. Method according to any one of the preceding claims,
**characterized** in that
the optimization target is a longest possible tool life as the sum (S).

5. Method according to any one of the preceding claims,
**characterized** in that
the optimization target consists in achieving a longest possible time interval between the tool changing processes at the machine tool working with the simultaneously operating several tool units (a, b, ...).

6. Method according to any one of the preceding claims,
**characterized** in that
the set movement parameters, particularly the set rotational speed (nKW) of the crankshaft (KW) lies between the highest and the lowest parameter of the separately determined optimum rates of motion (nKWa, nKWb, ...) for the individual machining locations (A, B, ...).

7. Method according to any one of the preceding claims,
**characterized** in that
the set movement parameters are not equal to the optimum movement parameters (nKWa, na, xa, ya, ...; nKWb, nb, xb, yb, ...) separately considered for each machining location.

8. Method for controlling the machining of a moving workpiece by rotary milling a rotating workpiece, such as a crankshaft, at several machining locations (A, B, ...) simultaneously by separate tool units (a, b, ...),
wherein
as the sum (S) of all simultaneously machined machining locations (A, B, ...) a longest possible tool life is to be achieved altogether,
**characterized** in that,
- for each of the simultaneously machined machining locations (A, B, ...) a depth of cut (H) is kept in the optimum range (hₒₚₜ ± Δ h), and
- in doing so the cutting speeds (Vₛ) at the machining locations (A, B, ...) are chosen such that the maximum tool life is achieved while keeping the predetermined station time for the machining of the machining locations (A, B, ...) and of the entire crankshaft (KW) respectively.

9. Method according to claim 8,
**characterized** in that
the optimum depth of cut (hₒₚₜ) is chosen as depth of cut (h) in accordance with the tool life relationship (tₛ = f(h)).

10. Method according to claim 8 or 9,
**characterized** in that
at the beginning of the optimization process a maximum admissible cutting speed (vₛₘₐₓ) is predetermined according to a minimum tool life (tₛₘᵢₙ) to be kept.

11. Method according to any one of claims 8 to 10,
**characterized** in that
- at the beginning of the optimization the maximum admissible cutting speed (vₛₘₐₓ) is set for the first (A) of the simultaneously machined machining locations (A, B, ...),
- from this the cutting speeds (vₛ) resulting for the other machining locations (B, ...) are determined, and
- the cutting speeds (vₛ) are increased for all machining locations (A, B, ...), in particular increased by the same value, if one of the cutting speeds resulting for the other machining locations (B, ...) was above* the admissible limit (vₛₘₐₓ).

12. Method according to any one of the preceding claims,
**characterized** in that
at the beginning of the optimization a lower limit (vₛₘᵢₙ) is set for the cutting speeds, particularly as a function of the predetermined station time.

## Revendications

1. Procédé pour la commande de l'usinage d'une pièce en déplacement par fraisage rotatif d'une pièce en rotation telle qu'une manivelle sur plusieurs points d'usinage (A, B,...) en même temps par des unités séparées d'outil (a, b, ...),
caractérisé
en ce qu'en connaissant les paramètres de déplacement optimaux séparés (nkwa, na, xa, ya, ...; nkwb, nb, xb, yb, ...)pour chaque point d'usinage (A, B) de pièces usinées (KW) et d'outil (WZ), la vitesse de déplacement de la pièce usinée , en particulier le nombre de tours (nKWa, nKWb) de la manivelle ainsi que les vitesses de déplacement (na, xa, ya, ...nb, xb, yb, ...) des unités d'outils (a, b)...) sont sélectionnés de sorte que dans la somme (S) de tous les points usinés simultanément (A, B,...), il soit obtenu un résultat d'usinage optimal du point de vue de la qualité et de la durée de vie de l'outil.

2. Procédé selon la revendication 1,
caractérisé en ce que l'usinage est un usinage par enlèvement de copeaux.

3. Procédé selon l'une des revendications précédentes,
caractérisé en ce que le mouvement de l'outil est une rotation de la pièce usinée autour de son propre axe.

4. Procédé selon l'une des revendications précédentes,
caractérisé en ce que la cible d'optimisation est une durée de vie de l'outil la plus longue possible en somme(S).

5. Procédé selon l'une des revendications précédentes,
caractérisé en ce que la cible d'optimisation est l'obtention d'un intervalle temps le plus long possible entre les opérations de changement d'outils sur la machine-outils travaillant avec plusieurs unités différentes (a, b...) fonctionnant en même temps.

6. Procédé selon l'une des revendications précédentes,
caractérisé en ce que
les paramètres de déplacement réglés, en particulier le nombre de tours réglés (nKW) de la manivelle (KW) se situent entre le niveau le plus haut et le niveau le plus bas des vitesses de déplacement optimales (nKWa, nKWb,...) pour les points d'usinage (A, B,...) déterminés séparément.

7. Procédé selon l'une des revendications précédentes,
caractérisé en ce que les paramètres de déplacement déterminés ne sont pas égaux aux, paramètres optimaux de déplacement (nKWa, na, xa, ya, ...; nKWb, nb, xb, yb, ...) , considérés séparément pour chaque point d'usinage.

8. Procédé pour la commande de l'usinage d'une pièce en déplacement par fraisage rotatif d'une pièce en rotation telle qu'une manivelle sur plusieurs points d'usinage (A, B,...) en même temps par des unités séparées d'outil (a, b, ...), un résultat d'usinage optimal devant être obtenu dans la somme (S) de tous les points usinés simultanément (A, B,....), caractérisé
- en ce que pour chacune des points usinés simultanément (A, B, ...), il faut respecter une épaisseur de copeaux (H) dans la plage optimale (hₒₚₜ D△h) et
- la vitesse de coupe (Vs) étant sélectionnée aux points d'usinage (A, B,...) de sorte qu'en respectant les temps de cycle prédéterminés pour l'usinage des points (A, B, ...) respectivement de l'ensemble de la manivelle (KW), on obtient la durée de vie maximale de l'outil.

9. Procédé selon la revendication 8,
caractérisé en ce qu'en tant qu'épaisseur de copeaux (h), on sélectionne l'épaisseur optimale de copeaux (hₒₚₜ) correspondant à la relation (tₛ = f(h)).

10. Procédé selon la revendication 8 ou 9,
caractérisé en ce qu'au début de l'opération d'optimisation, il est prédéterminé une vitesse de couple admissible maximale (Vₛₘₐₓ) correspondant à une durée de vie minimale à respecter (tₛₘᵢₙ).

11. Procédé selon l'une des revendications 8 à 10,
caractérisé
- en ce qu'au début de l'opération d'optimisation pour le premier (A) des points (A, B, ...) à usiner simultanément, la vitesse de coupe admissible maximale (Vₛₘₐₓ) est fixée,
- en ce qu'on en déduit les vitesses de coupe (Vₛ) résultant pou les autres points d'usinage (B, ...) et
- en ce que les vitesses de coupe (Vₛ) pour tous les points d'usinage (A, B, ...) sont augmentées en particulier de la même valeur au cas où l'une des vitesses de coupe résultant pour les autres points d'usinage (B, ...) se trouvait au-dessus de la limite admissible (Vₛₘₐₓ).

12. Procédé selon l'une des revendications précédentes,
caractérisé
en ce qu'au début de l'optimisation, il est fixé pour les vitesses de coupe une limite inférieure (Vₛₘᵢₙ) en particulier en fonction du temps de cycle prédéterminé.
